# EUROPÄISCHE PATENTSCHRIFT

(11) **EP 1 240 268 B1**
(45) Veröffentlichungstag und Bekanntmachung des Hinweises auf die Patenterteilung: **13.12.2006**
(21) Anmeldenummer: 00971329.8
(22) Anmeldetag: 06.10.2000
(51) Int. Cl.: C09J 131/02

(54) **VERFÄRBUNGSARME DISPERSIONSKLEBSTOFFE MIT VERLÄNGERTER TOPFZEIT**
DISCOLORATION-FAST DISPERSION ADHESIVES HAVING A PROLONGED POTLIFE
ADHESIFS A DISPERSION A FAIBLE TAUX DE DECOLORATION ET A TEMPS DE CONSERVATION EN POT ACCRU

(30) Priorität: 13.10.1999 DE 19949332
(43) Veröffentlichungstag der Anmeldung: 18.09.2002
(73) Patentinhaber: Celanese Emulsions GmbH, 61476 Kronberg/Ts. (DE)
(72) Erfinder: JAKOB, Martin, 65779 Kelkheim (DE)
(74) Vertreter: Ackermann, Joachim
(86) Internationale Anmeldenummer: PCT/EP2000/009797
(87) Internationale Veröffentlichungsnummer: WO 2001/027214

(56) Entgegenhaltungen:
- EP-A- 0 686 682

## Beschreibung

Die vorliegende Erfindung betrifft wasserresistente, wässrige Dispersionsklebstoffe auf Polyvinylesterbasis mit langer Topfzeit und guter Farbkonstanz ihrer Verklebungen bei Lagerung, Verfahren zur Herstellung dieser Dispersionsklebstoffe sowie deren Verwendung zum Verkleben von porösen und semiporösen Substraten.

Polyvinylesterdispersionen, deren Filme eine erhöhte Wasserresistenz zeigen, enthalten üblicherweise reaktive Monomere oder Additive, welche die Hydrophilie des Klebstoffs durch eine Vemetzung des zur Stabilisierung der Dispersion verwendeten Polyvinylalkohols herabsetzen. Als vemetzende Additive mit hoher Effizienz finden in wasserresistenten Klebstoffdispersionen auf Polyvinylesterbasis freie Aldehyde oder ihre Addukte mit Nucleophilen Verwendung, welche entweder für sich, oder nach Rückspaltung über freigesetzte reaktive Aldehydgruppen, Vernetzungsreaktionen eingehen können.

Als Vernetzungskatalysatoren werden häufig Härtersalze eingesetzt. Aus der US-A-3 563 851 und der DE-C-26 20 738 sind als Härtersalze saure Metallsalze bekannt, beispielsweise solche des Aluminiums oder solche von Nebengruppenelementen mit den Oxidationsstufen III oder IV.

Die DE-B-22 61 402 beschreibt wasserfeste Verklebungen auf Basis einer Polyvinylesterdispersion, denen ein vemetzend wirkendes Hamstoff-Formaldehydharz in Kombination mit einer freien organischen oder anorganischen Säure oder einem sauren Metallsalz zugemischt wird.

Die EP-A-0 413 136 beschreibt Klebstoffe mit Kaltwasserresistenz auf Basis von Polyvinylalkohol und Polyvinylestern. Als vernetzende Addukte werden N-Nucleophile mit Glyoxal, beispielsweise cyclische Harnstoffe oder copolymerisierte Reaktionsprodukte des Acrylamids, eingesetzt. Durch Zusatz von sauren Metallsalzen, vorzugsweise auf Basis von Aluminium, läßt sich die Wasserfestigkeit verbessern.

Die EP-B-0 686 682 beschreibt wässrige Dispersionsklebstoffe mit erhöhter Wasserbeständigkeit, enthaltend homo- oder copolymere Polyvinylester, Schutzkolloide, mit den Schutzkolloiden komplexierbare Verbindungen, sowie zumindest teilweise maskierte Polyaldehyde mit mindestens 3 C-Atomen, welche in sauren Medien kontrolliert Aldehydgruppen freisetzen. Eine Untergruppe der komplexierbaren Verbindungen bilden Metallsalze, beispielsweise Aluminium- oder Zirkoniumsalze. Die so erhaltenen Klebstoffe ergeben vorteilhafterweise helle Klebfugen und genügen einschlägigen Prüfnormen, insbesondere den Beanspruchungsgruppen DIN EN 204 D2 und D3 (Kaltwasserresistenz) bzw. DIN EN 204 D4 (Heißwasserresistenz). Die Topfzeiten nach Zumischung der Bestandteile betragen mindestens 8 Stunden.

Für den Endanwender dieser Klebstoffe ist eine möglichst lange Topfzeit, d. h. ein langsamer Anstieg der Viskosität der Dispersion nach Aktivierung mit den sauren Metallsalzen, grundsätzlich wünschenswert. Weiterhin ist eine hohe Farbkonstanz der hellen Klebfugen nach erfolgter Applikation wünschenswert. Die Verwendung von Übergangsmetallsalzen oder Aluminiumsalzen als Vemetzungskatalysatoren hat den Nachteil einer allmählichen Verdunklung der Klebfugen, die durch die Reaktion der Metallsalze mit vorhandenem Polyvinylalkohol oder eventuell vorhandenen Holzinhaltsstoffen hervorgerufen wird. Der Effekt wird beim Altem der Klebverbindung bei Raumtemperatur beobachtet und erfolgt beschleunigt bei Wärmeeinwirkung.

Einen Lösungsansatz zur Verbesserung des Verfärbungsverhaltens von Holzklebstoff-Dispersionen auf Polyvinylesterbasis, die Härtungsmittel enthalten, beschreibt die DE-A-196 49 419. Laut DE-A-196 49 419 verringert der Zusatz von niedermolekularen Polyvinylalkoholen mit Höppler-Viskositäten von 2 bis 6 mPa*s (gemessen in 4%iger wäßriger Lösung) die Verfärbungsneigung bei kaltwasserresistenten Klebverbindungen der Beanspruchungsgruppe D3. Nachteilig ist, dass der Zusatz größerer Mengen Polyvinylalkohol, der als Hydrophilierungsmittel wirkt, die Heißwasserresistenz von Verklebungen vermindert.

Es bestand demnach die Aufgabe, Polyvinylesterdispersionen für Klebstoffe bereitzustellen, die eine anwendergerechte hohe Topfzeit besitzen und deren Klebverbindungen bei hoher Wasserbeständigkeit eine hohe Farbkonstanz zeigen.

Es wurde nun überraschend gefunden, daß wässrige Dispersionsklebstoffe, enthaltend mindestens
a) einen homo- und/oder copolymeren Polyvinylester,
b) ein polymeres Schutzkolloid,
c) eine mit den polymeren Schutzkolloiden komplexierbare, wasserlösliche Verbindung und
d) zwei, zumindest teilweise maskierte, in sauren Medien wieder Aldehydgruppen freisetzende Polyaldehyde, dadurch gekennzeichnet, daß mindestens ein maskierter Polyaldehyd ein Glyoxalderivat darstellt und mindestens ein anderer maskierter Polyaldehyd ein Derivat eines Polyaldehyds mit mindestens 3 C-Atomen darstellt,
eine anwendergerechte lange Topfzeit und eine hohe Wasserbeständigkeit und Farbkonstanz ihrer Klebfugen zeigen.

Bei den Polyaldehyden mit mindestens 3 C-Atomen handelt es sich um mindestens bifunktionelle Aldehyde.

Als Monomerbausteine für die homo- und copolymeren Polyvinylester eignen sich bevorzugt Vinylacetat, Vinylformiat, Vinylpropionat, Vinylisobutyrat, Vinylpivalat, Vinyl-2-ethylhexanoat, Vinylester von gesättigten, verzweigten Monocarbonsäuren mit 9 bis 10 Kohlenstoffatomen im Säurerest, Vinylester von längerkettigen, gesättigten oder ungesättigten Fettsäuren wie z.B. Vinyllaurat, Vinylstearat, sowie Vinylester der Benzoesäure und/oder substituierte Derivate der Benzoesäure wie z.B. Vinyl-p-tert.-butylbenzoat. Besonders bevorzugt eignet sich Vinylacetat.

Der Gewichtsanteil an Vinylester(n) in den copolymeren Polyvinylestern beträgt bevorzugt mindestens 50 Gew.-% und besonders bevorzugt mindestens 75 Gew.-%.

Die copolymeren Vinylester enthalten gegebenenfalls als weitere Monomerbausteine
a) bis zu 50 Gew.-%, bevorzugt bis zu 25 Gew.-%, an einem oder mehreren Monomeren aus der Gruppe: Ethylen, α-Olefine mit 3 bis 18 Kohlenstoffatomen (z.B. Propylen, Butylen), Styrol, Vinyltoluol, Vinylxylol, halogenierte, ungesättigte, aliphatische Kohlenwasserstoffe (z.B. Vinylchlorid, Vinylfluorid, Vinylidenchlorid, Vinylidenfluorid) und/oder
b) bis zu 25 Gew.-%, bevorzugt zwischen 1 und 5 Gew.-%, an einem oder mehreren Monomeren aus der Gruppe: α,β-ungesättigte Säuren (z.B. Acrylsäure, Methacrylsäure), Ester von α,β-ungesättigten Säuren mit primären oder sekundären, gesättigten, einwertigen Alkoholen mit 1 bis 18 Kohlenstoffatomen (z.B. Methanol, Ethanol, Propanol, Butanol, 2-Ethylhexanol, cycloaliphatische Alkohole sowie längerkettige Fettalkohole), α,β-ungesättigte Dicarbonsäuren (z.B. Maleinsäure, Fumarsäure, Itaconsäure, Citraconsäure), Mono- und/oder Diester von α,β-ungesättigten Dicarbonsäuren mit gesättigten, einwertigen, aliphatischen Alkoholen mit 1 bis 18 Kohlenstoffatomen und/oder
c) bis zu 10 Gew.-%, bevorzugt bis zu 2 Gew.-%, an einem oder mehreren Monomeren aus der Gruppe der mehrfach ethylenisch ungesättigten Monomeren, wie z.B. Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)acrylat, Vinylcrotonat, Methylenbisacrylamid, Hexandioldiacrylat, Pentaerythroldiacrylat, Trimethylolpropantriacrylat und/oder
d) bis zu 15 Gew.-%, bevorzugt bis zu 10 Gew.-%, an einem oder mehreren stickstoffhaltigen Monomeren mit N-funktionellen Gruppen, wie z.B. (Meth)acrylamid, Allylcarbamat, Acrylnitril, N-Methylol(meth)acrylamid, N-Methylolallylcarbamat, N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)acrylamid, N-Dimethylaminopropyl(meth)-acrylamid, N-Methyl(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid, Ethylimidazolidonmethacrylat, N-Vinylformamid, N-Vinylpyrrolidon und/oder
e) bis zu 25 Gew.-%, bevorzugt bis zu 15 Gew.-%, an einem oder mehreren Monomeren aus der Gruppe der hydroxyfunktionellen Monomere, wie z.B. Hydroxyethyl(meth)acrylat, Hydroxypropyl(meth)acrylat oder deren Addukte mit Ethylenoxid oder Propylenoxid, und/oder
f) bis zu 10 Gew.-%, bevorzugt bis zu 5 Gew.-%, an einem oder mehreren Monomeren aus der Gruppe der über Carbonylgruppen vernetzbaren und/oder selbstvemetzenden Monomere, wie z.B. Diacetonacrylamid, Allylacetoacetat, Vinylacetoacetat und Acetoacetoxyethyl(meth)acrylat.

Als polymere Schutzkolloide eignen sich z.B. Polyvinylalkohole, copolymere Polyvinylalkohole, die Carboxylmonomere, -Ethylen und/oder 1-Methylvinylalkoholeinheiten tragen, polymeranaloge Umsetzungsprodukte von Polyvinylalkoholen, beispielsweise solche mit Diketen, veretherte Cellulosederivate, wie z.B. Hydroxyethylcellulose und Carboxymethylcellulose, Polyvinylpyrrolidon, Polycarbonsäuren, wie z.B. Polyacrylsäure, und/oder Copolymere der Maleinsäure oder des Maleinsäureanhydrids mit ethylenisch ungesättigten Verbindungen, wie z.B. Methylvinylether, Isobutylen oder Styrol. Bevorzugt geeignet als Schutzkolloid ist Polyvinylalkohol vom Hydrolysegrad 60 bis 100 Mol-%, besonders bevorzugt vom Hydrolysegrad 70 bis 98 Mol-%, mit Viskositäten der 4 gew.-%igen wäßrigen Lösungen von 2 bis 70 mPas bei 20°C.

Der Anteil der polymeren Schutzkolloide beträgt, bezogen auf den Feststoffanteil, bevorzugt 1 bis 25 Gew.-% und besonders bevorzugt 2 bis 10 Gew.-%.

Gegebenenfalls kann die Klebstoffdispersion nichtionische und/oder ionische Emulgatoren, Additive und/oder Hilfsmittel enthalten. Der Anteil an Emulgatoren beträgt, bezogen auf das Polymerisat, bevorzugt bis zu 2 Gew.-%.
Beispiele für Additive sind Filmbildehilfsmittel zur Erniedrigung derMFT, Weichmacher, Entschäumer, Füllstoffe und Konservierungsmittel. Als Hilfsmittel können z.B. Komplexbildner auf Basis mehrzähniger Liganden, wie z.B. Ethylendiamintetraessigsäure, eingesetzt werden, die mit den wasserlöslichen Kationen der verwendeten Metallsalze Komplexe bilden und dadurch die Farbkonstanz der Klebfugen verbessern.

Als mit den polymeren Schutzkolloiden komplexierbare Verbindungen eignen sich wasserlösliche Metallsalze und Salze und Säuren mit Oxoanionen. Bevorzugt geeignete Metallsalze sind saure Metallsalze mit mehrwertigen komplexierbaren Kationen, wie sie beispielsweise in der DE-B-22 61 402, der DE-C-26 20 738 und der DE-A-39 42 628 aufgeführt sind. Besonders geeignet sind die wasserlöslichen Metallsalze von AI(III) und Zr(IV) und insbesondere geeignet sind Aluminiumchlorid, Aluminiumnitrat und Zirkonoxychlorid. Bevorzugt geeignete Salze und Säuren mit Oxoanionen sind solche, deren Oxoanionen Polyanionen binden können. Besonders geeignet sind Borate und Phosphate und insbesondere geeignet sind die freie Borsäure und die freie Phosphorsäure.

Bei den Glyoxalderivaten handelt es sich um Addukte von Glyoxal mit S-, O- und/oder N-Nucleophilen. Geeignete Addukte mit S-Nucleophilen sind z.B. die Bisulfitaddukte, bevorzugt die von Natriumhydrogensulfit oder Kaliumhydrogensulfit. Geeignete O-Nucleophile sind z.B. aliphatische (C₁ bis C₂₀)-Monoalkohole. Bevorzugt geeignet sind (C₁ bis C₁₂)-Monoalkohole, wie z.B. Methanol und Ethanol. Als O-Nucleophile ebenfalls geeignet sind mehrwertige Alkohole, wie z.B. Ethylenglykol, 1,2-Propylenglykol und 1,3-Propylenglykol. Als Addukt sei beispielhaft 2,3-Dihydroxy-1,4-dioxan genannt. Geeignete N-Nucleophile sind z.B. aliphatische Monoamine, Amide, Harnstoff und cyclische Harnstoffe, wie z.B. Ethylenharnstoff. Als Addukt sei beispielhaft 3,4-Dihydroxyethylenhamstoff genannt.

Im Rahmen der Erfindung sind bezüglich der Maskierung des Glyoxals selbstverständlich auch Mischformen der oben genannten Maskierungsmöglichkeiten zulässig.

Die erfindungsgemäßen Klebstoffdispersionen enthalten, bezogen auf die Festsubstanz der Klebstoffdispersion, vorzugsweise 0,001 bis 10 Gew.-%, besonders bevorzugt 0,01 bis 5 Gew.-%, und insbesondere 0,1 bis 2 Gew.-%, an Glyoxalderivaten.

Beispiele für Polyaldehyde mit mindestens 3 C-Atomen sind Malondialdehyd, Succindialdehyd, Glutardialdehyd, 2-Hydroxyglutardialdehyd, β-Methylglutardialdehyd, Pimelindialdehyd, Suberindialdehyd, Malein- und Fumarsäuredialdehyd, Korksäuredialdehyd, Sebacinsäuredialdehyd, Äpfelsäuredialdehyd, Phthaldialdehyd, Isophthaldialdehyd, Terephthaldialdehyd und kemsubstituierte aromatische Aldehyde.

Bei den Derivaten der Polyaldehyde mit mindestens 3 C-Atomen handelt es um Addukte der Polyaldehyde mit S-, O- und/oder N-Nucleophilen. Bevorzugte Addukte sind die Bisulfitaddukte. Besonders bevorzugt sind die Glutardialdehydbisalkalihydrogensulfite. Bevorzugte Gegenionen der Bisulfitaddukte sind Lithium-, Natrium-, Kalium-, Magnesium-, Calcium-, Aluminium-, Ammoniumionen und/oder substituierte Ammoniumionen.

Weitere erfindungsgemäß geeignete Derivate der Polyaldehyde mit mindestens 3 C-Atomen sind deren offenkettige Acetale mit aliphatischen (C₁-C₂₀)-, vorzugsweise (C₁ bis C₁₂)-Monoalkoholen, insbesondere Methanol und Ethanol, sowie deren cyclische Acetale mit mindestens bifunktionellen Alkoholen, vorzugsweise Ethylenglykol, 1,2-Propylenglykol, 1,3-Propylenglykol. Beispielhaft seien genannt Chlormalondialdehydbisdiethylacetal, Succindialdehydmono- undbisdimethylacetal, Succindialdehydbisdiethylacetal, 2-Bromsuccindialdehydbisdimethylacetal, Oximinosuccindialdehydbisdimethylacetal und die Bisdimethyl- und Bisdiethylacetale des Maleindialdehyds. Unter diese Gruppe fallen femer die intramolekularen cyclischen Acetale des Succindialdehyds und Glutardialdehyds, wie 2,5-Dimethoxy-tetrahydrofuran, 2,5-Diethoxytetrahydrofuran sowie 2,6-Dimethoxytetrahydro-2H-pyran und 2,6-Diethoxytetrahydro-2H-pyran. Besonders geeignete Verbindungen aus dieser Gruppe sind die Bisdimethyl- und Bisdiethylacetale des Malondialdehyds und Glutardialdehyds.

Weitere geeignete Derivate der Polyaldehyde mit mindestens 3 C-Atomen sind deren Enolether, Enolester, Acylate und gemischten Acylatether. Unter diesen existieren auch Verbindungen, die Aldehydgruppen enthalten, die aus konstitutionellen Gründen überwiegend in der Enolform vorliegen, beispielsweise Oxybrenztraubensäurealdehyd (Redukton). Diese, sowie Umsetzungsprodukte der Enole, in denen die restlichen, nicht in der Enolform vorliegenden Aldehydgruppen weiter maskiert sein können, stellen ebenfalls geeignete Derivate dar.

Erfindungsgemäß ebenfalls geeignete Derivate der Polyaldehyde mit mindestens 3 C-Atomen stellen die spaltbaren Umsetzungsprodukte der Polyaldehyde mit Stickstoffverbindungen dar. Zu diesen Derivaten zählen die Oxime, Oximester, Oximether, Imine (Schiffsche Basen), Enamine, Aminale, Hydrazone, Semicarbazone, Anile, Diurethane und Enaminurethane polyfunktioneller Aldehyde. Beispielhaft seien genannt Glutardialdehyddioxim, Phthaldialdehydmono- und - dioxim, Phthaldialdehyd-oximsemicarbazon, Isophthalaldoxim, Terephthalaldoxim, Terephthalaldehyd-dihydrazon und die Anile des Malondialdehyds, Succindialdehyds und Glutardialdehyds.

Im Rahmen der Erfindung sind bezüglich der Maskierung der Polyaldehyde mit mindestens 3 C-Atomen selbstverständlich auch Mischformen der obengenannten Maskierungsmöglichkeiten zulässig.

Die erfindungsgemäßen Klebstoffdispersionen enthalten, bezogen auf die Festsubstanz der Klebstoffdispersion, vorzugsweise 0,001 bis 10 Gew.-%, besonders bevorzugt 0,01 bis 5 Gew.-%, und insbesondere 0,1 bis 2 Gew.-%, an Derivaten der Polyaldehyde mit mindestens 3 C-Atomen.

Die erfindungsgemäßen Klebstoffdispersionen besitzen einen pH-Wert bei dem die Derivate der Polyaldehyde mit mindestens 3 C-Atomen und gegebenenfalls die Derivate des Glyoxals hydrolysiert werden und die Aldehydgruppen kontrolliert freigesetzt werden. Dieser pH-Bereich liegt bevorzugt zwischen 2 und 6, besonders bevorzugt zwischen 2,5 und 4. Um den pH-Wert einzustellen werden gegebenenfalls organische und/oder anorganische Lewis- und Brönsted-Säuren zugesetzt. Bevorzugt geeignete Brönsted-Säuren weisen einen pKₛ-Wert < 2,5 auf, wie z.B. Phosphorsäure, Salzsäure, Schwefelsäure, Salpetersäure, Perchlorsäure, p-Toluolsulfonsäure. Die besonders bevorzugte Brönsted-Säure ist Phosphorsäure. Bevorzugt geeignete Lewis-Säuren sind die sauren Salze komplexierbarer Metallionen. Besonders bevorzugte Lewis-Säuren sind Aluminiumchlorid, Aluminiumnitrat und Zirkonoxychlorid.

In Zwei-Komponentensystemen erfolgt die Aktivierung des Klebstoffs vorzugsweise durch Zusatz der sauren komplexierbaren Verbindungen.

Der Feststoffgehalt der erfindungsgemäßen Klebstoffdispersion beträgt bevorzugt 20 bis 65 Gew.-%, besonders bevorzugt 30 bis 60 Gew.-%.

Gegenstand der vorliegenden Erfindung ist auch ein Verfahren zur Herstellung der erfindungsgemäßen Dispersionsklebstoffe, bei dem eine Mischung in Form einer konfektionierten Polyvinylesterdispersion hergestellt wird, enthaltend als Bestandteile mindestens
a) einen homo- und/oder copolymeren Polyvinylester,
b) ein polymeres Schutzkolloid,
c) eine mit den polymeren Schutzkolloiden komplexierbare Verbindung und
d) zwei, zumindest teilweise maskierte, in sauren Medien wieder Aldehydgruppen freisetzende Polyaldehyde, bei denen mindestens ein maskierter Polyaldehyd ein Glyoxalderivat darstellt und mindestens ein anderer maskierter Polyaldehyd ein Derivat eines Polyaldehyds mit mindestens 3 C-Atomen darstellt,
und anschließend falls erforderlich, der pH-Wert durch Zugabe von Lewis- und/oder Brönsted-Säuren eingestellt wird.

Die Herstellung der erfindungsgemäßen Klebstoffe kann die Herstellung von Polyvinylesterdispersionen beinhalten, welche den Bestandteil a), einen Teil, vorzugsweise die Gesamtmenge, der polymeren Schutzkolloide b) und gegebenenfalls Emulgatoren, Additive wie Verfilmungshilfsmittel etc. und/oder Hilfsstoffe enthalten.

Die Herstellung der Polyvinylesterdispersionen kann mit Hilfe der üblichen kontinuierlichen oder diskontinuierlichen Verfahren der radikalischen Emulsionspolymerisation erfolgen. Hierbei kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, Natriumformaldehydsulfoxylat, Ascorbinsäure als Redoxkatalysatorsystem verwendet werden. Die polymeren Schutzkolloide und gegebenenfalls die Emulgatoren, Addditive und/oder Hilfsstoffe können vor, während oder nach der Polymerisation zugegeben werden.

In einer bevorzugten Ausführungsform für einen Zwei- oder Mehrkomponentenklebstoff wird zunächst als erste Komponente eine Mischung hergestellt, enthaltend die Bestandteile a), b), c) und gegebenenfalls Emulgatoren, Additive und/oder Hilfsstoffe. Anschließend werden die maskierten Polyaldehyde d), umfassend die Glyoxalderivate und die Derivate der Polyaldehyde mit mindestens 3 C-Atomen, zusammen oder getrennt der Mischung zugegeben.

Bei einer Untervariante dieser Ausführungsform wird zunächst eine Mischung hergestellt, enthaltend die Bestandteile a), b), c), die Glyoxalderivate und gegebenenfalls Emulgatoren, Additive und/oder Hilfsstoffe. Anschließend werden die Derivate der Polyaldehyde mit mindestens 3 C-Atomen als weitere Komponente der Mischung zugegeben.

In einer weiteren bevorzugten Ausführungsform für einen Zwei- oder Mehrkomponentenklebstoff wird zunächst eine Mischung hergestellt, enthaltend die Bestandteile a), b), d) und gegebenenfalls Emulgatoren, Additive, und/oder Hilfsstoffe. Anschließend erfolgt die Aktivierung der Mischung durch Zugabe der mit den polymeren Schutzkolloiden komplexierbaren Verbindungen c). Als aktivierende Verbindungen werden bevorzugt wässrige Lösungen, die Aluminiumchlorid, Aluminiumnitrat und/oder Zirkonoxychlorid enthalten, eingesetzt. Die Mischung sollte vor Zugabe der komplexierenden Verbindungen einen möglichst neutralen pH-Wert, mindestens jedoch einen pH-Wert von 6, besitzen, da dann keine oder nur eine sehr langsame Hydrolyse der maskierten Polyaldehyde eintritt, was die Standzeit des nicht aktivierten Klebstoffs verbessert. Zu diesem Zweck kann der pH-Wert der Mischung auch nachträglich durch Zugabe üblicher Neutralisationsmittel eingestellt werden.

Die Glyoxalderivate und die Derivate der Polyaldehyde mit mindestens 3 C-Atomen können als Feststoffe oder in Form von Lösungen zugegeben werden. Als Lösungen eignen sich z.B. wässrige Lösungen oder Lösungen in aliphatischen Alkoholen. Bevorzugt erfolgt die Zugabe in Form einer konzentrierten, wässrigen Lösung, da dann der Viskositätsabfall in der Dispersion minimiert wird.

Selbstverständlich kann auch nach Herstellung des aktivierten Klebstoffsystems im Bedarfsfall eine weitere Konfektionierung, z.B. durch Zugabe von Hilfsstoffen, wie z.B. Entschäumungsmitteln, oder die Zugabe weiterer polymerer Schutzkolloide, wie z.B. Polyvinylalkohol etc., zur Verlängerung der offenen Zeit erfolgen. Diese Vorgehens-weisen sind dem Fachmann prinzipiell bekannt.

Gegenstand der Erfindung ist weiterhin die Verwendung der erfindungsgemäßen Dispersionsklebstoffe zum Verkleben von porösen und semiporösen Substraten. Bevorzugte Substrate sind Holz, Papier, Pappe, Wellpappe, Schaumstoffe, Zement, Leder, Textilstoffe oder Preßschichtstoffe.

Besonders geeignet sind die erfindungsgemäßen Klebstoffzubereitungen als Klebstoffe für cellulosische Substrate wie Holz und Papier. Die Klebstoffe eignen sich für die manuelle oder maschinelle Applikation, sowie wegen der Farbneutralität der Klebungen insbesondere auch für Anwendungen, bei denen die Klebfugen durch hochfrequente Wechselfelder gehärtet werden. Ein spezielles Anwendungsgebiet ist die Herstellung von Fensterrahmen sowie die Furnierleimung.

Speziellere Anwendungen der erfindungsgemäßen Klebstoffdispersionen liegen in Klebstoffen und Bindemitteln für den Bau-, Wohn- und Textilbereich, wie z.B. Fußboden-, Wand- und Deckenklebstoffen, Möbelfolien- und Teppichrückenklebem, Bindemitteln für Holzfaserplatten und Faserleder, Bindemitteln für Dämmaterialien aus Papier- oder Kunststoffasern, Bindemitteln für säureresistente Mineralien in Baustoffdispersionen und Bindemitteln für Textilien und Non-Woven. Ein Einsatz als Klebstoff bzw. Bindemittel im Textildruck und als Textilappretur ist ebenfalls möglich.

Die erfindungsgemäßen Klebstoffdispersionen weisen im Vergleich zu den im Stand der Technik beschriebenen Klebstoffdispersionen verlängerte Topfzeiten, bzw. langsamere Viskositätsanstiege, bei verbesserter Farbkonstanz und vergleichbar hoher Wasserbeständigkeit der Klebfugen auf. Die Klebverbindungen genügen gemäß der Prüfnorm DIN EN 204 wenigstens der Beanspruchungsgruppe D2, vorzugsweise der Beanspruchungsgruppe D3 und insbesondere der Beanspruchungsgruppe D4.

Weiterhin ist hervorzuheben, daß es sich bei den erfindungsgemäßen Dispersionsklebstoffen vorteilhafterweise um Systeme handelt, die isocyanatfrei und weitgehend auch formaldehydfrei sind. Insbesondere in Dispersionen, die formaldehydabgebende Bestandteile enthalten, bieten die besonders bevorzugten Hydrogensulfitaddukte des Glyoxals sowie der Polyaldehyde mit mindestens 3 C-Atomen darüber hinaus den weiteren Vorteil, daß das bei der Vernetzung freiwerdende Hydrogensulfit als Formaldehydfänger fungiert und so die Konzentration an freiem Formaldehyd in den Klebstoffen oder Bindemitteln deutlich verringert.

### Verwendete Prüfmethoden:

### 1. Bestimmung der Topfzeit:

Wenn keine numerischen Viskositätsangaben gemacht werden, wird hierunter der Zeitraum verstanden, in dem die Klebstoffdispersionen in der konfektionierten Endform (mit Metallsalz und Vernetzungsmittel) mit einer täglich zu kontrollierenden Viskosität von ≤40 Pa*s nach Brookfield RVT 6/20 noch sicher fließfähig waren.

### 2. Ermittlung der Klebfestigkeiten:

Die Ermittlung der Klebfestigkeiten (Reißfestigkeiten) erfolgte an Buchenholzprüflingen nach Kochwasserbehandlung gemäß der Prüfnorm DIN EN 204/D4. Die Herstellung der Prüfkörper erfolgte nach der Vorgehensweise der DIN EN 205. Die Verleimung und Prüfung wurde unter Berücksichtigung folgender Kenndaten durchgeführt:

| | |
|---|---|
| Reifezeit nach Härterzusatz | 2 Stunden |
| Leimauftrag | 150 ± 20 g/m² beidseitiger Auftrag |
| Offene Wartezeit | 3 Minuten |
| Geschlossene Wartezeit | 2 Stunden |
| Preßzeit | 2 Stunden |
| Preßdruck | 0,7 ± 0,1 N/mm² |
| Anzahl Prüfkörper pro Prüffolge | 20 |
| Prüfung nach Lagerungsfolge gemäß DIN EN 204 D4/5 | 7 Tage Normklima (23 ± 2°C und 50 ± 5 % relative Luftfeuchte) |
| | 6 Stunden in kochendem Wasser |
| | 2 Stunden in kaltem Wasser |
| Prüftemperatur | 23 ± 2°C |
| Vorschubgeschwindigkeit | 50 mm/min |

Die Einordnung in die Beanspruchungsgruppe D4/5 erfolgte bei einer Klebfestigkeit (Reißfestigkeit) von mindestens 4 N/mm².

### 3. Bestimmung des Verfärbungsverhaltens auf Eichenholz

Die Klebstoffdispersionen wurden mit einem Kastenrakel mit 800 µm Naßauftrag auf Eichenholz aufgetragen und anschließend in dieser Form in einen beheizten Trockenschrank bei 90°C gelegt. Nach 45 Minuten wurden die getrockneten Filme herausgenommen und die Verfärbung visuell beurteilt.

Die nachfolgenden Beispiele dienen der näheren Erläuterung der Erfindung, ohne sie einzuschränken. Die in den Beispielen angegebenen Teile und Prozente beziehen sich, soweit nicht anders vermerkt, auf das Gewicht. Bei den Vergleichsklebstoffen handelt es sich um Klebstoffe gemäß EP-B-0 686 682.

### Beispiel 1: Herstellung eines erfindungsgemäßen Klebstoffs 1 und eines Vergleichsklebstoffs 1

In einem Glasrührkesselreaktor mit Ankerrührer, der mit Zulaufmöglichkeiten, Rückflußkühler, Mantelheizung und Mantelkühlung versehen war, wurde eine Polyvinylacetat-Homopolymerdispersion, enthaltend 100 Teile Polyvinylacetat, unter Verwendung von 6 Teilen Mowiol^{®} 18-88 (Clariant GmbH, teilverseifter Polyvinylalkohol vom Hydrolysegrad 88 Mol-%) als Schutzkolloid, sowie 0,1 Teilen Wasserstoffperoxid als Initiator hergestellt. Man arbeitete mit einem Dosierverfahren, wobei 4,2 Teile Vinylacetat vorgelegt wurden und 95,8 Teile Vinylacetat innerhalb von 3 Stunden bei einer Polymerisationstemperatur von 70 bis 74°C zudosiert wurden. Nach beendeter Polymerisation wurden 0,17 Teile Natriumacetat zugegeben. Man erhielt eine koagulatfreie Dispersion mit einem pH-Wert von 3,8, einem Feststoffgehalt von 50 Gew.-%, einem Gehalt an monomerem Vinylacetat von 0,4 % und einer Viskosität von 48,8 Pa*s (Meßsystem Brookfield 6/20, 23°C). Anschließend wurden der Dispersion 2 % Butyldiglykolacetat zur Erniedrigung der MFT und 5 % einer gesättigten Lösung von Aluminiumchlorid-Hexahydrat zugegeben.

Im Falle des erfindungsgemäßen Klebstoffs 1 wurden der obigen Dispersion anschließend wässrige Lösungen von handelsüblichem Glutardialdehydbisnatriumhydrogensulfit (GABNA) und handelsüblichem Glyoxalbisnatriumhydrogensulfitmonohydrat (GLYBNA) zugesetzt. Im Falle des Vergleichsklebstoffs 1 wurde der Dispersion anschließend nur eine wässrige Lösung von handelsüblichem Glutardialdehydbisnatriumhydrogensulfit (GABNA) zugesetzt. Die Ausgangsviskosität der beiden Klebstoffe betrug jeweils 7 Pa*s (Brookfield 6/20, 23°C). In Tabelle 1 ist die Zusammensetzung der Klebstoffe angegeben. Ebenfalls in Tabelle 1 angegeben sind die Topfzeiten und die Klebfestigkeiten der Klebstoffe gemäß DIN EN 204.

**Tabelle 1: Zusammensetzungen, Topfzeiten und Klebfestigkeiten des erfindungsgemäßen Klebstoffs 1 und des Vergleichsklebstoffs 1 gemäß DIN EN 204**

| | erfindungsgemäßer Klebstoff 1 | Vergleichsklebstoff 1 (gemäß EP-B-0 686 682) |
|---|---|---|
| Teile Dispersion | 100 | 100 |
| Teile GABNA | 0,5 | 0,5 |
| Teile GLYBNA | 0,5 | - |
| Teile Wasser | 4 | 4 |
| Topfzeit/Tage | > 3 Tage | 1 Tag |
| D4/5 N/mm² | 4,2 | 4,0 |

Tabelle 1 zeigt, daß der erfindungsgemäße Klebstoff 1 gegenüber dem Vergleichsklebstoff 1, bei vergleichbarer Heißwasserbeständigkeit, eine deutlich verlängerte Topfzeit aufweist.

### Beispiel 2: Herstellung eines erfindungsgemäßen Klebstoffs 2 und eines Vergleichsklebstoffs 2

100 Teile Mowilith^{®} D ca. 50 %ig (mit Polyvinylalkohol stabilisierte Polyvinylacetat-Homopolymer-Dispersion, Clariant GmbH) wurden mit 2,2 Teilen einer gesättigten Lösung von Aluminiumchlorid-Hexahydrat versetzt, worauf sich ein pH-Wert von 3 einstellte. Zur Herstellung des erfindungsgemäßen Klebstoffs 2 wurden anschließend wässrige Lösungen von handelsüblichem Glutardialdehyd-bisnatriumhydrogensulfit (GABNA) und handelsüblichem Glyoxalbisnatriumhydrogen-sulfitmonohydrat (GLYBNA) zugesetzt. Zur Herstellung des Vergleichsklebstoffs 2 wurde lediglich eine wässrige Lösung von handelsüblichem Glutardialdehyd-bisnatriumhydrogensulfit (GABNA) zugesetzt. Beide Klebstoffe besaßen eine Ausgangsviskosität von 7 Pa*s (Brookfield 6/20, 23°C). Die Zusamensetzungen des erfindungsgemäßen Klebstoffs 2 und des Vergleichsklebstoffs 2 sind in Tabelle 2 angegeben. Vom erfindungsgemäßen Klebstoff 2 und vom Vergleichsklebstoff 2 wurde gemäß DIN EN 204 die Klebfestigkeit bestimmt, das Verfärbungsverhalten auf Eichenholz ermittelt und die Viskosität der Klebstoffe als Funktion der Zeit ermittelt. Die Ergebnisse sind in Tabelle 2 und Tabelle 3 aufgeführt.

**Tabelle 2: Zusammensetzungen, Topfzeiten, Klebfestigkeiten gemäß DIN EN 204 und Verfärbungsverhalten auf Eichenholz des erfindungsgemäßen Klebstoffs 2 und des Vergleichsklebstoffs 2**

| | erfindungsgemäßer Klebstoff 2 | Vergleichsklebstoff 2 (gemäß EP-B-0 686 682) |
|---|---|---|
| Teile Dispersion | 102,2 | 102,2 |
| GABNA | 0,67 | 0,67 |
| GLYBNA | 0,5 | |
| Wasser | 6,25 | 6,25 |
| D4/5 N/mm² | 4,2 | 4,3 |
| Verfärbung auf Eichenholz | nahezu farblos | hellbraun verfärbt |

**Tabelle 3: Viskositätsentwicklung (Meßsystem Brookfield 6/20) des erfindungsgemäßen Klebstoffs 2 und des Vergleichsklebstoffs 2 als Funktion der Zeit bei 23°C.**

| Zeit (Tage) | Viskosität des erfindungsgemäßen Klebstoffs 2 (Pa*s) | Viskosität des Vergleichsklebstoffs 2 (gemäß EP-B-0 686 682) (Pa*s) |
|---|---|---|
| 0 | 7,1 | 7,1 |
| 1 | 7,4 | 9,7 |
| 2 | 9,1 | 14,7 |
| 3 | 10,8 | 20,0 |
| 5 | 12,6 | 28,6 |
| 7 | 22,0 | 42,0 |

Beispiel 2 zeigt, daß der erfindungsgemäße Klebstoff 2 gegenüber dem Vergleichsklebstoff 2, bei vergleichbar hoher Heißwasserbeständigkeit, einen langsameren Viskositätsanstieg und ein günstigeres Verfärbungsverhalten auf Eichenholz aufweist.

## Patentansprüche

1. Wässrige Dispersionsklebstoffe, enthaltend mindestens
a) einen homo- und/oder copolymeren Polyvinylester,
b) ein polymeres Schutzkolloid,
c) eine mit den polymeren Schutzkolloiden komplexierbare, wasserlösliche Verbindung und
d) zwei, zumindest teilweise maskierte, in sauren Medien wieder Aldehydgruppen freisetzende Polyaldehyde, **dadurch gekennzeichnet, daß** mindestens ein maskierter Polyaldehyd ein Glyoxalderivat darstellt und mindestens ein anderer maskierter Polyaldehyd ein Derivat eines Polyaldehyds mit mindestens
3 C-Atomen darstellt.

2. Dispersionsklebstoffe nach Anspruch 1, **dadurch gekennzeichnet, daß** die homo- und copolymeren Polyvinylester als Monomerbausteine Vinylacetat, Vinylformiat, Vinylpropionat, Vinylisobutyrat, Vinylpivalat, Vinyl-2-ethylhexanoat, Vinylester von gesättigten, verzweigten Monocarbonsäuren mit 9 bis 10 Kohlenstoffatomen im Säurerest, Vinylester von längerkettigen, gesättigten oder ungesättigten Fettsäuren, Vinylester der Benzoesäure und/oder Vinylester substituierter Derivate der Benzoesäure enthalten.

3. Dispersionsklebstoffe nach Anspruch 1 oder 2, **dadurch gekennzeichnet, daß** die homo- und copolymeren Polyvinylester als Monomerbaustein Vinylacetat enthalten.

4. Dispersionsklebstoffe nach mindestens einem der Ansprüche 1 bis 3, **dadurch gekennzeichnet, daß** der Gewichtsanteil an Vinylester(n) in den copolymeren Polyvinylestern mindestens 50 Gew.-% beträgt.

5. Dispersionsklebstoffe nach mindestens einem der Ansprüche 1 bis 4, **dadurch gekennzeichnet, daß** die copolymeren Polyvinylester als Monomerbausteine
a) bis zu 50 Gew.-% an einem oder mehreren Monomeren aus der Gruppe: Ethylen, α-Olefine mit 3 bis 18 Kohlenstoffatomen, Styrol, Vinyltoluol, Vinylxylol, halogenierte, ungesättigte, aliphatische Kohlenwasserstoffe und/oder
b) bis zu 25 Gew.-% an einem oder mehreren Monomeren aus der Gruppe: α,β-ungesättigte Säuren, Ester von α,β-ungesättigten Säuren mit primären oder sekundären, gesättigten, einwertigen Alkoholen mit 1 bis 18 Kohlenstoffatomen, Ester von α,β-ungesättigten Säuren mit längerkettigen Fettalkoholen, α,β-ungesättigte Dicarbonsäuren, Mono- und/oder Diester von α,β-ungesättigten Dicarbonsäuren mit gesättigten, einwertigen, aliphatischen Alkoholen mit 1 bis 18 Kohlenstoffatomen und/oder
c) bis zu 10 Gew.-% an einem oder mehreren Monomeren aus der Gruppe der mehrfach ethylenisch ungesättigten Monomeren und/oder
d) bis zu 15 Gew.-% an einem oder mehreren Monomeren mit N-funktionellen Gruppen und/oder
e) bis zu 25 Gew.-% an einem oder mehreren Monomeren mit hydroxyfunktionellen Gruppen und/oder
f) bis zu 10 Gew.-% an einem oder mehreren Monomeren aus der Gruppe der über Carbonylgruppen vemetzbaren Monomere und/oder selbstvemetzenden Monomere enthalten.

6. Dispersionsklebstoffe nach mindestens einem der Ansprüche 1 bis 5, **dadurch gekennzeichnet, daß** es sich bei den polymeren Schutzkolloiden um Polyvinylalkohole, copolymere Polyvinylalkohole, die Carboxylmonomere, -Ethylen und/oder 1-Methylvinylalkoholeinheiten tragen, polymeranaloge Umsetzungsprodukte von Polyvinylalkoholen, veretherte Cellulosederivate, Polyvinylpyrrolidon, Polycarbonsäuren und/oder Copolymere der Maleinsäure oder des Maleinsäureanhydrids mit ethylenisch ungesättigten Verbindungen handelt.

7. Dispersionsklebstoffe nach mindestens einem der Ansprüche 1 bis 6, **dadurch gekennzeichnet, daß** darin 1 bis 25 Gew.-%, bezogen auf den Feststoffanteil, an Schutzkolloiden enthalten sind.

8. Dispersionsklebstoffe nach mindestens einem der Ansprüche 1 bis 7, **dadurch gekennzeichnet, daß** es sich bei den mit den polymeren Schutzkolloiden komplexierbaren Verbindungen um wasserlösliche Metallsalze, Salze mit Oxoanionen und/oder Säuren mit Oxoanionen handelt.

9. Dispersionsklebstoffe nach Anspruch 8, **dadurch gekennzeichnet, daß** es sich bei den wasserlöslichen Metallsalzen um Salze von AI(III) und Zr(IV) handelt, und daß es sich bei den Oxoanionen um Borate und Phosphate handelt.

10. Dispersionsklebstoffe nach mindestens einem der Ansprüche 1 bis 9, **dadurch gekennzeichnet, daß** es sich bei den Glyoxalderivaten um Addukte von Glyoxal mit S-, O- und/oder N-Nucleophilen handelt.

11. Dispersionsklebstoffe nach Anspruch 10, **dadurch gekennzeichnet, daß** es sich bei den S-Nucleophilen um Addukte mit Natriumhydrogensulfit und/oder Kaliumhydrogensulfit handelt, daß es sich bei den O-Nucleophilen um Addukte mit aliphatischen (C₁ bis C₂₀)-Monoalkoholen und/oder mehrwertigen Alkoholen handelt, und daß es sich bei den N-Nucleophilen um aliphatische Monoamine, Amide, Harnstoff und/oder cyclische Harnstoffe handelt.

12. Dispersionsklebstoffe nach mindestens einem der Ansprüche 1 bis 11, **dadurch gekennzeichnet, daß** darin 0,001 bis 10 Gew.-%, bezogen auf die Festsubstanz, an Glyoxalderivaten enthalten sind.

13. Dispersionsklebstoffe nach mindestens einem der Ansprüche 1 bis 12, **dadurch gekennzeichnet, daß** es sich bei den Polyaldehyden mit mindestens 3 C-Atomen um Malondialdehyd, Succindialdehyd, Glutardialdehyd, 2-Hydroxyglutar-dialdehyd, β-Methylglutardialdehyd, Pimelindialdehyd, Suberindialdehyd, Maleinsäuredialdehyd, Fumarsäuredialdehyd, Korksäuredialdehyd, Sebacinsäure-dialdehyd, Äpfelsäuredialdehyd, Phthaldialdehyd, Isophthaldialdehyd, Terephthaldialdehyd und/oder kernsubstituierte Derivate aromatischer Aldehyde handelt.

14. Dispersionsklebstoffe nach mindestens einem der Ansprüche 1 bis 13 **dadurch gekennzeichnet, daß** es sich bei den Derivaten der Polyaldehyde mit mindestens 3 C-Atomen um Addukte der Polyaldehyde mit S-, O- und/oder N-Nucleophilen handelt.

15. Dispersionsklebstoffe nach Anspruch 14, **dadurch gekennzeichnet, daß** es sich bei den Derivaten der Polyaldehyde mit mindestens 3 C-Atomen um Bisulfitaddukte, offenkettige Acetale, cyclische Acetale, Enolether, Enolester, Acylate, gemischte Acylatether, Oxime, Oximester, Oximether, Imine (Schiffsche Basen), Enamine, Aminale, Hydrazone, Semicarbazone, Anile, Diurethane und/oder Enaminurethane handelt.

16. Dispersionsklebstoffe nach Anspruch 15, **dadurch gekennzeichnet, daß** es sich bei den Bisulfitaddukten um die Glutardialdehydbisalkalihydrogensulfite handelt.

17. Dispersionsklebstoffe nach mindestens einem der Ansprüche 1 bis 16, **dadurch gekennzeichnet, daß** darin 0,001 bis 10 Gew.-%, bezogen auf die Festsubstanz, an Derivaten von Polyaldehyden mit mindestens 3 C-Atomen enthalten sind.

18. Dispersionsklebstoffe nach mindestens einem der Ansprüche 1 bis 17, **dadurch gekennzeichnet, daß** die Dispersionsklebstoffe einen pH-Wert im Bereich von 2 bis 6 besitzen.

19. Verfahren zur Herstellung eines Dispersionsklebstoffs nach mindestens einem der Ansprüche 1 bis 18, bei dem eine Mischung in Form einer konfektionierten Polyvinylesterdispersion hergestellt wird, enthaltend als Bestandteile mindestens
a) einen homo- und/oder copolymeren Polyvinylester,
b) ein polymeres Schutzkolloid,
c) eine mit den polymeren Schutzkolloiden komplexierbare Verbindung und
d) zwei, zumindest teilweise maskierte, in sauren Medien wieder Aldehydgruppen freisetzende Polyaldehyde, wobei mindestens ein maskierter Polyaldehyd ein Glyoxalderivat darstellt und mindestens ein anderer maskierter Polyaldehyd ein Derivat eines Polyaldehyds mit mindestens 3 C-Atomen darstellt,
und anschließend, falls erforderlich, der pH-Wert durch Zugabe von Lewis- und/oder Brönsted-Säuren eingestellt wird.

20. Verfahren nach Anspruch 19, **dadurch gekennzeichnet, daß** zunächst eine Mischung hergestellt wird, enthaltend die Bestandteile a), b) und c), und anschließend erst der Bestandteil d) zugegeben wird.

21. Verfahren nach Anspruch 19, **dadurch gekennzeichnet, daß** zunächst eine Mischung hergestellt wird, enthaltend die Bestandteile a, b), c) und die Glyoxalderivate, und anschließend erst die Derivate der Polyaldehyde mit mindestens 3 C-Atomen zugegeben werden.

22. Verfahren nach Anspruch 19, **dadurch gekennzeichnet, daß** zunächst eine Mischung hergestellt wird, enthaltend die Bestandteile a), b) und d), und anschließend erst die Aktivierung durch Zugabe des Bestandteils c) erfolgt.

23. Verwendung der Dispersionsklebstoffe, gemäß mindestens einem der Ansprüche 1 bis 18, zum Verkleben von porösen und semiporösen Substraten.

24. Verwendung nach Anspruch 23, **dadurch gekennzeichnet, daß** es sich bei den Substraten um Holz, Papier, Pappe, Wellpappe, Schaumstoffe, Zement, Leder, Textilstoffe oder Preßschichtstoffe handelt.

25. Verwendung der Dispersionsklebstoffe, gemäß mindestens einem der Ansprüche 1 bis 18, als Klebemittel bei der Herstellung von Fensterrahmen und bei der Fumierleimung.

26. Verwendung der Dispersionsklebstoffe, gemäß mindestens einem der Ansprüche 1 bis 18, als Bindemittel, insbesondere für Textilien und Non-Woven.

## Claims

1. An aqueous dispersion adhesive comprising at least
a) one homopolymeric and/or copolymeric polyvinyl ester,
b) one polymeric protective colloid,
c) one water-soluble compound which can be complexed with the polymeric protective colloids, and
d) two, at least partly masked polyaldehydes which release aldehyde groups again in acidic media, wherein at least one masked polyaldehyde is a glyoxal derivative and at least one other masked polyaldehyde is a derivative of a polyaldehyde having at least 3 carbon atoms.

2. The dispersion adhesive as claimed in claim 1, wherein the homopolymeric and copolymeric polyvinyl esters comprise as monomer units vinyl acetate, vinyl formate, vinyl propionate, vinyl isobutyrate, vinyl pivalate, vinyl 2-ethylhexanoate, vinyl esters of saturated, branched monocarboxylic acids having 9 to 10 carbon atoms in the acid radical, vinyl esters of relatively long-chain, saturated or unsaturated fatty acids, vinyl esters of benzoic acid and/or vinyl esters of substituted derivatives of benzoic acid.

3. The dispersion adhesive as claimed in claim 1 or 2, wherein the homopolymeric and copolymeric polyvinyl esters comprise vinyl acetate as monomer units.

4. The dispersion adhesive as claimed in at least one of claims 1 to 3, wherein the weight fraction of vinyl ester(s) in the copolymeric polyvinyl esters is at least 50% by weight.

5. The dispersion adhesive as claimed in at least one of claims 1 to 4, wherein the copolymeric polyvinyl esters comprise as monomer units
a) up to 50% by weight of one or more monomers from the following group: ethylene, α-olefins having from 3 to 18 carbon atoms, styrene, vinyltoluene, vinylxylene, halogenated, unsaturated, aliphatic hydrocarbons and/or
b) up to 25% by weight of one or more monomers from the following group: α,β-unsaturated acids, esters of α,β-unsaturated acids with primary or secondary, saturated, monohydric alcohols having from 1 to 18 carbon atoms, esters of α,β-unsaturated acids with relatively long-chain fatty alcohols, α,β-unsaturated dicarboxylic acids, monoesters and/or diesters of α,β-unsaturated dicarboxylic acids with saturated, monohydric, aliphatic alcohols having from 1 to 18 carbon atoms and/or
c) up to 10% by weight of one or more monomers from the group consisting of polyethylenically unsaturated monomers and/or
d) up to 15% by weight of one or more monomers containing N-functional groups and/or
e) up to 25% by weight of one or more monomers containing hydroxyfunctional groups and/or
f) up to 10% by weight of one or more monomers from the group consisting of monomers which are self-crosslinking and/or monomers which are crosslinkable by way of carbonyl groups.

6. The dispersion adhesive as claimed in at least one of claims 1 to 5, wherein the polymeric protective colloids comprise polyvinyl alcohols, copolymeric polyvinyl alcohols which carry carboxyl monomers, -ethylene and/or 1 -methylvinyl alcohol u nits, polymer-analogous reaction products of polyvinyl alcohols, etherified cellulose derivatives, polyvinylpyrrolidone, polycarboxylic acids and/or copolymers of maleic acid or of maleic anhydride with ethylenically unsaturated compounds.

7. The dispersion adhesive as claimed in at least one of claims 1 to 6, containing from 1 to 25% by weight, based on the solids fraction, of protective colloids.

8. The dispersion adhesive as claimed in at least one of claims 1 to 7, wherein the compounds which can be complexed with the polymeric protective colloids comprise water-soluble metal salts, salts with oxoanions and/or acids with oxoanions.

9. The dispersion adhesive as claimed in claim 8, wherein the water-soluble metal salts are salts of AI(III) and Zr(IV) and wherein the oxoanions are borates and phosphates.

10. The dispersion adhesive as claimed in at least one of claims 1 to 9, wherein the glyoxal derivatives are adducts of glyoxal with S, O and/or N nucleophiles.

11. The dispersion adhesive as claimed in claim 10, wherein the S nucleophiles are adducts with sodium hydrogen sulfite and/or potassium hydrogen sulfite, wherein the O nucleophiles are adducts with aliphatic (C₁ to C₂₀) monoalcohols and/or monohydric alcohols, and wherein the N nucleophiles are aliphatic monoamines, amides, urea and/or cyclic ureas.

12. The dispersion adhesive as claimed in at least one of claims 1 to 11, containing from 0.001 to 10% by weight, based on the solid matter, of glyoxal derivatives.

13. The dispersion adhesive as claimed in at least one of claims 1 to 12, wherein the polyaldehydes having at least 3 carbon atoms comprise malonaldehyde, succinaldehyde, glutaraldehyde, 2-hydroxyglutaraldehyde, β-methylglutaraldehyde, pimelaldehyde, suberaldehyde, malealdehyde, fumaraldehyde, sebacaldehyde, malaldehyde, phthalaldehyde, isophthalaldehyde, terephthalaldehyde, and/or ring-substituted derivatives of aromatic aldehydes.

14. The dispersion adhesive as claimed in at least one of claims 1 to 13, wherein the derivatives of the polyaldehydes having at least 3 carbon atoms comprise adducts of polyaldehydes with S, O and/or N nucleophiles.

15. The dispersion adhesive as claimed in claim 14, wherein the derivatives of the polyaldehydes having at least 3 carbon atoms comprise bisulfite adducts, open-chain acetals, cyclic acetals, enol ethers, enol esters, acylates, mixed acylate ethers, oximes, oxime esters, oxime ethers, imines (Schiff bases), enamines, aminals, hydrazones, semicarbazones, anils, diurethanes and/or enamine urethanes.

16. The dispersion adhesive as claimed in claim 15, wherein the bisulfite adducts are the glutaraldehyde bis-alkali metal hydrogen sulfites.

17. The dispersion adhesive as claimed in at least one of claims 1 to 16, containing from 0.001 to 10% by weight, based on the solid matter, of derivatives of polyaldehydes having at least 3 carbon atoms.

18. The dispersion adhesive as claimed in at least one of claims 1 to 17, possessing a pH in the range from 2 to 6.

19. A process for preparing a dispersion adhesive as claimed in at least one of claims 1 to 18, in which a mixture is prepared in the form of a formulated polyvinyl ester dispersion comprising as constituents at least
a) one homopolymeric and/or copolymeric polyvinyl ester,
b) one polymeric protective colloid,
c) one compound which can be complexed with the polymeric protective colloids, and
d) two, at least partly masked polyaldehydes which release aldehyde groups again in acidic media, in which at least one masked polyaldehyde is a glyoxal derivative and at least one other masked polyaldehyde is a derivative of a polyaldehyde having at least 3 carbon atoms,
and subsequently, where necessary, adjusting the pH by adding Lewis and/or Brönsted acids.

20. The process as claimed in claim 19, wherein first of all a mixture is prepared comprising constituents a), b), and c), and only then is constituent d) added.

21. The process as claimed in claim 19, wherein first of all a mixture is prepared comprising the constituents a, b), c) and glyoxal derivatives, and only then are the derivatives of the polyaldehydes having at least 3 carbon atoms added.

22. The process as claimed in claim 19, wherein first of all a mixture is prepared comprising the constituents a), b), and d), and only then is the mixture activated by adding constituent c).

23. The use of a dispersion adhesive as claimed in at least one of claims 1 to 18 for adhesively bonding porous and semiporous substrates.

24. The use as claimed in claim 23, wherein the substrates comprise wood, paper, cardboard, corrugated cardboard, foam materials, cement, leather, textiles or laminates.

25. The use of a dispersion adhesive as claimed in at least one of claims 1 to 18 as an adhesive in the production of window frames and in veneer gluing.

26. The use of a dispersion adhesive as claimed in at least one of claims 1 to 18 as a binder, especially for textiles and nonwovens.

## Revendications

1. Adhésifs à dispersion en solution aqueuse, contenant au moins
a) un polyester de vinyle homo- ou copolymère,
b) un colloïde protecteur polymère,
c) un composé hydrosoluble, complexable avec les colloïdes protecteurs polymères et
d) deux polyaldéhydes au moins partiellement masqués, libérant de nouveau des groupes aldéhyde en milieu acide, **caractérisés en ce qu'**au moins un polyaldéhyde masqué représente un dérivé glyoxal et au moins un autre polyaldéhyde masqué un dérivé d'un polyaldéhyde avec au moins 3 atomes de carbone.

2. Adhésifs à dispersion selon la revendication 1, **caractérisés en ce que** les polyesters de vinyle homo- et copolymères contiennent comme squelettes de monomères l'acétate de vinyle, le formiate de vinyle, le propionate de vinyle, l'isobutyrate de vinyle, le pivalate de vinyle, le 2-éthylhexanoate de vinyle, des esters de vinyle d'acides monocarboxyliques saturés, ramifiés avec 9 à 10 atomes de carbone dans le résidu acide, des esters de vinyle d'acides gras à longue chaîne, saturés ou insaturés, des esters de vinyle de l'acide benzoïque et/ou des esters de vinyle de dérivés substitués de l'acide benzoïque.

3. Adhésifs à dispersion selon la revendication 1 ou 2, **caractérisés en ce que** les polyesters de vinyle homo- et copolymères contiennent de l'acétate de vinyle comme squelette monomère.

4. Adhésifs à dispersion selon au moins une des revendications 1 à 3, **caractérisés en ce que** la proportion en poids d'ester(s) de vinyle dans les polyesters de vinyle copolymères s'élève à au moins 50 % en poids.

5. Adhésifs à dispersion selon au moins l'une des revendications 1 à 4, **caractérisés en ce que** les polyesters de vinyle copolymères contiennent comme squelettes monomères
a) jusqu'à 50 % en poids d'un ou de plusieurs monomères du groupe : éthylène, α-oléfines avec 3 à 18 atomes de carbone, styrène, vinyltoluène, vinylxylène, hydrocarbures aliphatiques halogénés insaturés et/ou
b) jusqu'à 25 % en poids d'un ou de plusieurs monomères du groupe : acides α,β-insaturés, esters d'acides α,β-insaturés avec des alcools primaires ou secondaires, saturés, monohydroxylés ayant 1 à 18 atomes de carbone, esters d'acides α,β-insaturés avec des alcools gras à plus longue chaîne, acides dicarboxyliques α,β-insaturés, mono- et/ou diesters d'acides dicarboxyliques α,β-insaturés avec des alcools aliphatiques monohydroxylés saturés ayant 1 à 18 atomes de carbone et/ou
c) jusqu'à 10 % en poids d'un ou de plusieurs monomères du groupe des monomères plusieurs fois éthyléniquement insaturés et/ou
d) jusqu'à 15 % en poids d'un ou de plusieurs monomères avec des groupes N-fonctionnels et/ou
e) jusqu'à 25 % en poids d'un ou de plusieurs monomères avec des groupes hydroxyfonctionnels et/ou
f) jusqu'à 10 % en poids d'un ou de plusieurs monomères du groupe des monomères réticulables via des groupes carbonyle et/ou dès monomères autoréticulant.

6. Adhésifs à dispersion selon au moins l'une des revendications 1 à 5, **caractérisés en ce qu'**il s'agit pour les colloïdes protecteurs polymères d'alcools polyvinyliques, d'alcools polyvinyliques copolymères, qui portent des monomères carboxyle, des motifs éthylène et/ou 1-méthylvinylalcool, des produits de réaction par analogie de polymères d'alcools polyvinyliques, des dérivés éthérifiés de cellulose, la polyvinylpyrrolidone, des acides polycarboxyliques et/ou des copolymères de l'acide maléique ou de l'anhydride d'acide maléique avec des composés éthyléniquement insaturés.

7. Adhésifs à dispersion selon au moins l'une des revendications 1 à 6, **caractérisés en ce qu'**ils contiennent 1 à 25 % en poids de colloïdes protecteurs, par rapport à la proportion de matières solides.

8. Adhésifs à dispersion selon au moins l'une des revendications 1 à 7, **caractérisés en ce qu'**il s'agit pour les composés complexables avec les colloïdes protecteurs polymères de sels métalliques hydrosolubles, de sels avec des anions oxo et/ou d'acides avec des anions oxo.

9. Adhésifs à dispersion selon la revendication 8, **caractérisés en ce qu'**il s'agit pour les sels métalliques hydrosolubles de sels de Al (III) et Zr(IV), et pour les anions oxo de borates et de phosphates.

10. Adhésifs à dispersion selon au moins l'une des revendications 1 à 9, **caractérisés en ce qu'**il s'agit pour les dérivés glyoxal d'adduits de glyoxal avec des S-, O- ou N-nucléophiles.

11. Adhésifs à dispersion selon la revendication 10, **caractérisés en ce qu'**il s'agit pour les S-nucléophiles d'adduits avec l'hydrogénosulfite de sodium et/ou l'hydrogénosulfite de potassium, qu'il s'agit pour les O-nucléophiles d'adduits avec des mono-alcools aliphatiques en C₁ à C₂₀ et/ou d'alcools polyhydroxylés, et qu'il s'agit pour les N-nucléophiles de monoamines aliphatiques, d'amides, d'urée et/ou d'urées cycliques.

12. Adhésifs à dispersion selon au moins l'une des revendications 1 à 11, **caractérisés en ce qu'**ils contiennent 0,001 à 10 % en poids, par rapport à la substance solide, de dérivés glyoxal.

13. Adhésifs à dispersion selon au moins l'une des revendication 1 à 12, **caractérisés en ce qu'**il s'agit pour les polyaldéhydes avec au moins 3 atomes de carbone de malondialdéhyde, succindialdéhyde, glutardialdéhyde, 2-hydroxyglutar-dialdéhyde, β-méthylglutardialdéhyde, pimélindialdéhyde, subérindialdéhyde, dialdéhyde d'acide maléique, dialdéhyde d'acide fumarique, dialdéhyde d'acide subérique, dialdéhyde d'acide sébacique, dialdéhyde d'acide malique, dialdéhyde d'acide phtalique, dialdéhyde isophtalique, dialdéhyde téréphtalique et/ou de dérivés d'aldéhydes aromatiques substitués sur le noyau.

14. Adhésifs à dispersion selon au moins l'une des revendications 1 à 13, **caractérisés en ce qu'**il s'agit pour les dérivés des polyaldéhydes avec au moins 3 atomes de carbone d'adduits des polyaldéhydes avec des S-, O- et/ou N-nucléophiles.

15. Adhésifs à dispersion selon la revendication 14, **caractérisés en ce qu'**il s'agit pour les dérivés des polyaldéhydes avec au moins 3 atomes de carbone d'adduits de bisulfite, d'acétals à chaîne ouverte, d'acétals cycliques, d'énoléthers, d'énolesters, d'acylates, d'acilatéthers mixtes, d'oximes, d'oximesters, d'imines (bases de Schiff), d'énamines, d'aminals, d'hydrazones, de semicarbazones, d'aniles, de diuréthanes et/ou d'énaminuréthanes.

16. Adhésifs à dispersion selon la revendication 15, **caractérisés en ce qu'**il s'agit pour les adduits de bisulfite des bisalcalihydrogénosulfites de glutardialdéhyde.

17. Adhésifs à dispersion selon au moins l'une des revendications 1 à 16, **caractérisés en ce qu'**ils contiennent 0,001 à 10 % en poids, par rapport à la substance solide, de dérivés de polyaldéhydes avec au moins 3 atomes de carbone.

18. Adhésifs à dispersion selon au moins l'une des revendications 1 à 17, **caractérisés en ce que** les adhésifs à dispersion possèdent une valeur de pH dans la gamme de 2 à 6.

19. Procédé de préparation d'un adhésif à dispersion selon au moins l'une des revendications 1 à 18, dans lequel on prépare un mélange sous la forme d'une dispersion prête à l'emploi de polyesters de vinyle, contenant comme constituants au moins
a) un polyester de vinyle homo- et/ou copolymère,
b) un colloïde protecteur polymère,
c) un composé complexable avec les colloïdes protecteurs polymères et
d) deux polyaldéhydes au moins partiellement masqués, libérant de nouveau des groupes aldéhyde en milieu acide, **caractérisés en ce qu'**au moins un polyaldéhyde masqué représente un dérivé glyoxal et au moins un autre polyaldéhyde masqué un dérivé d'un polyaldéhyde avec au moins 3 atomes de carbone,
et ensuite, si nécessaire, on ajuste la valeur de pH par ajout d'acides de Lewis et/ou de Brônsted.

20. Procédé selon la revendication 19, **caractérisé en ce qu'**on ajoute d'abord un mélange, contenant les constituants a), b) et c), et ensuite alors le constituant d).

21. Procédé selon la revendication 19, **caractérisé en ce qu'**on ajoute d'abord un mélange, contenant les constituants a), b) et c) et les dérivés glyoxal, et ensuite alors les dérivés des polyaldéhydes avec au moins 3 atomes de carbone.

22. Procédé selon la revendication 19, **caractérisé en ce qu'**on prépare d'abord un mélange, contenant les constituants a), b) et d), et ensuite seulement on effectue l'activation par ajout du constituant c).

23. Utilisation des adhésifs à dispersion, selon au moins l'une des revendications 1 à 18, pour le collage de substrats poreux et semi-poreux.

24. Utilisation selon la revendication 23, **caractérisée en ce qu'**il s'agit pour les substances de bois, de papier, de chiffon, de carton ondulé, de substances en mousse, de ciment, de cuir, de matières textiles ou de stratifiés densifiés.

25. Utilisation des adhésifs à dispersion, selon au moins l'une des revendications 1 à 18, comme colles pour la préparation de cadres de fenêtres et pour le collage de placages.

26. Utilisation des adhésifs à dispersion, selon au moins l'une des revendications 1 à 18, comme liant, en particulier pour les textiles et les non-tissés.
